# EUROPEAN PATENT SPECIFICATION

(11) **EP 1 273 424 B1**
(45) Date of publication and mention of the grant of the patent: **02.02.2005**
(21) Application number: 02012393.1
(22) Date of filing: 18.03.1997
(51) Int. Cl.: B29C 45/73, B29C 45/56, B29D 11/00

(54) **Method of injection molding plastic lens**
Verfahren zum Spritzgiessen von Kunststofflinsen
Procédé de fabrication des lentilles en matière plastique

(43) Date of publication of application: 08.01.2003
(62) Divisional of application: 97907364.0
(73) Proprietor: HOYA CORPORATION, Shinjuku-ku Tokyo 161 (JP)
(72) Inventor: Saito, Kiyohiro, Shinjuku-ku, Tokyo 161 (JP); Asami, Hiroshi, Shinjuku-ku, Tokyo 161 (JP)
(74) Representative: Haley, Stephen

(56) References cited:
- EP-A- 0 279 972
- US-A- 4 836 960
- US-A- 5 604 549
- PATENT ABSTRACTS OF JAPAN vol. 014, no. 420 (M-1023), 11 September 1990 (1990-09-11) & JP 02 164516 A (HITACHI LTD), 25 June 1990 (1990-06-25)

## Description

The present invention relates to a method of injection molding a plastic lens and, more particularly, to temperature control of an injection molding assembly for making a highly precise lens molded in a cavity.

An injection molding technology to mold a meniscus-shaped plastic spectacle lens is shown in Japanese Patent Publication No. Hei 5-30608. In this technology, a cavity for molding the lens is formed inside an injection molding assembly, the cavity containing a pair of cavity forming members for shaping a convex surface and a concave surface of the lens disposed vertically opposite with each other. The injection molding assembly is heated before filling a molten resin in the cavity and one cavity forming member is moved toward the other cavity forming member to pressurize the molten resin filled in the cavity. Subsequently, the injection molding assembly is cooled to cool and solidify the molten resin, and the molded lens is taken out (= eject).

It is shown in Japanese Patent Laid-open No. Hei 6-31785 that an injection molding assembly is heated by means of a heating fluid such as steam and cooled by means of a cooling fluid such as air, water. In addition, after a molten resin is filled in a cavity in the injection molding assembly of which the temperature is raised beyond flow halting temperature of the molten resin, the temperature of the injection molding assembly is lowered below a glass transition point for molding a lens by cooling and solidifying the molten resin.

US-A-4836960 discloses a method and apparatus for the fabrication of optical lenses by injection/compression moulding of thermoplastic.

A lens is a precise molded product which requires high molding precision. Especially in a meniscus lens used for a spectacle lens, it is important that a convex shape and a concave shape of a pair of cavity forming members for shaping a convex surface and a concave surface of the lens are precisely transferred to the lens. However, when a lens to be molded has a difference in thickness between a central portion and a peripheral portion thereof, a thickness of the central portion being smaller than that of the peripheral portion, the lens is easy to bend at the thin central portion. When such a disadvantage occurs, a high-precision lens to which a convex shape and a concave shape of cavity forming members are accurately transferred is not obtained.

For manufacturing a high-precision lens, it is important to prevent heat distortion or shrinkage deformation from occuring, which requires that the entire molten resin filled in the cavity is uniformly cooled. However, since the amount of the molten resin filled in the cavity corresponds to the volume of the lens and differs depending on a type of the lens, especially lens power, uniform cooling is difficult by controlling the temperature uniformly. Thus, temperature control of an injection molding assembly is desired for molding each lens high precisely irrespective of the above difference.

An object of the present invention is to provide a plastic lens injection molding method to mold a high-precision lens by means of proper temperature control of an injection molding assembly.

According to the present invention there is provided a method of injection molding a plastic lens comprising the steps of:
filling a molten resin in a cavity for molding the lens inside a heated injection molding assembly;
pressurizing the molten resin;
cooling the injection molding assembly to cool and solidify the molten resin to mold the lens in the cavity; and
ejecting the lens from the cavity, characterised in that
a cooling time of the injection molding assembly is lengthened in proportion to increase in the power of the lens molded in the cavity increases, wherein the lens is a spectacle lens, and wherein the injection molding assembly has at least two temperature curves for molding a weak lens and a strong lens for minus lenses and at least one temperature curve for a plus lens; the temperature of the injection molding assembly being controlled in accordance with the temperature curves, and by the injection moulding assembly being heated and cooled by heating and cooling fluids.

Time to cool the injection molding assembly after pressurization of the molten resin is preferably lengthened in proportion to the increase in the lens power in order to mold each of highly precise lenses having different power. As the lens power increases, the volume of the lens, that is, the amount of the molten resin filled in the cavity increases. Therefore, the whole molten resin in the cavity can be gradually cooled uniformly to a predetermined temperature by lengthening a cooling time in proportion to the increase of the lens power. Consequently, each of lenses with different powers can be molded highly precisely with little heat distortion, little shrinkage deformation and the like.

In the above, a pair of the cavity forming members for shaping the convex surface and the concave surface of the lens may be opposed with each other vertically or horizontally. In other words, an injection molding machine in which the injection molding assembly is mounted can be vertically or horizontally structured.

The number of cavities provided in the injection molding assembly is optional. One or more than one cavity is available.

In the method of injection molding the plastic lens according to the present invention, the molten resin is filled in the cavity for molding the lens inside the heated injection molding assembly and pressurized. Subsequently, the injection molding assembly is cooled to cool and solidify the molten resin so as to mold the lens in the cavity before ejecting the lens from the cavity. The time to cool the injection molding assembly is lengthened in proportion to increase in the power of the lens molded in the cavity.

According to the aforementioned injection molding method, since the cooling time of the injection molding assembly is controlled in proportion to change in power, the entire molten resin can be uniformly cooled to the predetermined temperature, thereby manufacturing a high-precision lens with little heat distortion, little shrinkage deformation and the like.

The injection molding method is available for molding, a lens of which a thickness of a peripheral portion is smaller than that of a central portion (a plus lens), and a semi-finished lens as well as the aforementioned minus lens.

Moreover, the injection molding method is applicable not only for molding a meniscus lens for molding other types of lenses.

Some spectacle lenses have the same lens power, and different astigmatic powers. In such spectacle lenses with the same power and different astigmatic powers, it is preferable that the cooling time of the injection molding assembly is lengthened in proportion to increase in the astigmatic power, since the amount and/or the shape of molten resin filled in the cavity change in accordance with the astigmatic power even when the surface area of cavities in the injection molding assembly have no substantial difference.

The injection molding assembly is heated and cooled by means of a temperature controlling fluid of which the temperature is controlled, more specifically a heating fluid and a cooling fluid, temperature control can be performed highly precisely and easily.

The temperature of the injection molding assembly is controlled in accordance with temperature curves, at least two temperature curves being prepared for weak power and strong power for the minus lens and at least one for the plus lens. In molding a semi-finished lens of which one surface is later processed, it is preferable that another temperature curve is further prepared and the temperature of the injection molding assembly is controlled in accordance with the temperature curve. Thus, at least three temperature curves of the injection molding assembly, that is , for a weak minus lens, a strong minus lens and a plus lens, or four temperature curves can be prepared when a temperature curve for a semi-finished lens is included, so that temperature control can be easily conducted.

When the minus lens and the plus lens are molded, it is preferable that time to cool the injection molding assembly after pressurization of the molten resin is set for respective groups divided by lens spherical power and lens astigmatic power. Especially in molding the minus lens, the cooling time is preferably set for respective groups divided on the basis of the sum of lens spherical power and lens astigmatic power.

### Brief Description of Drawings

Fig. 1 is a vertical sectional view of an injection molding assembly used for implementing a molding method according to an embodiment of the present invention;
Fig. 2 is a sectional view taken along the II-II line in Fig. 1;
Fig. 3 is a sectional view taken along the III-III line in Fig. 1;
Fig. 4 is a schematic view showing an apparatus for adjusting and controlling the temperature of the molding assembly;
Fig. 5 is a fragmentary enlarged view of Fig. 1 in molding a minus lens having thicker peripheral portion than a central portion;
Fig. 6 is a perspective view of a whole minus lens;
Fig. 7 is a sectional view taken along the VII-VII line in Fig. 6;
Fig. 8 is a sectional view taken along the VIII-VIII line in Fig. 6;
Fig. 9 is a fragmentary enlarged view of Fig. 1 in molding a plus lens having thinner peripheral portion is thinner than a central portion;
Fig. 10 is a perspective view of a whole plus lens;
Fig. 11 is a sectional view taken along the XI-XI line in Fig. 10;
Fig. 12 is a sectional view taken along the XII-XII line in Fig. 10; and
Fig. 13 is a graphical representation showing changes in temperature of an upper mold insert and a lower mold insert for various kinds of lenses from pressurization of a molten resin to ejection of a molded product;

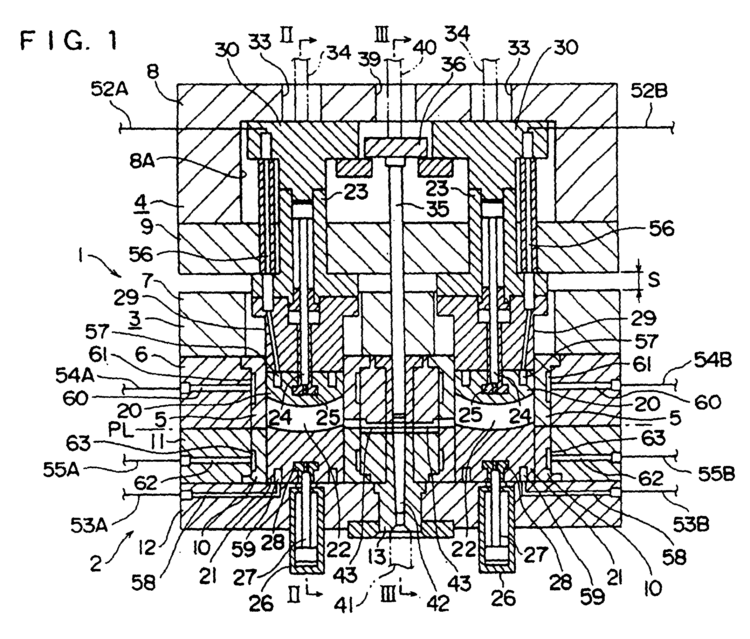

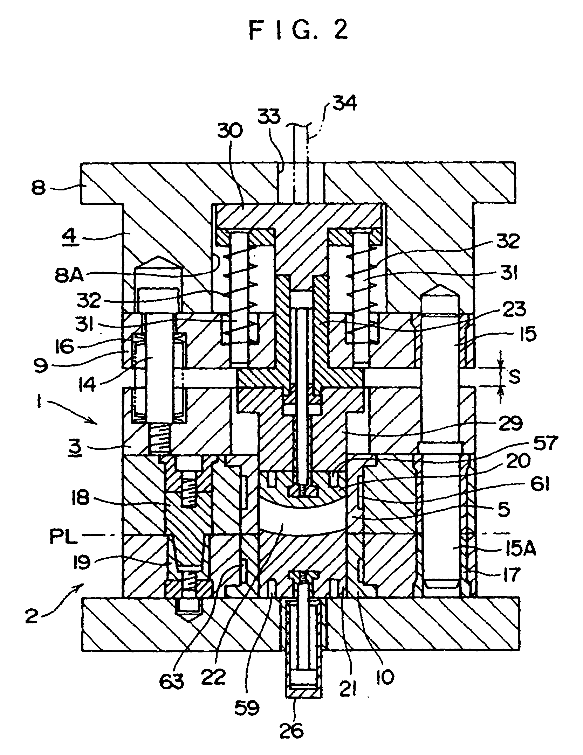

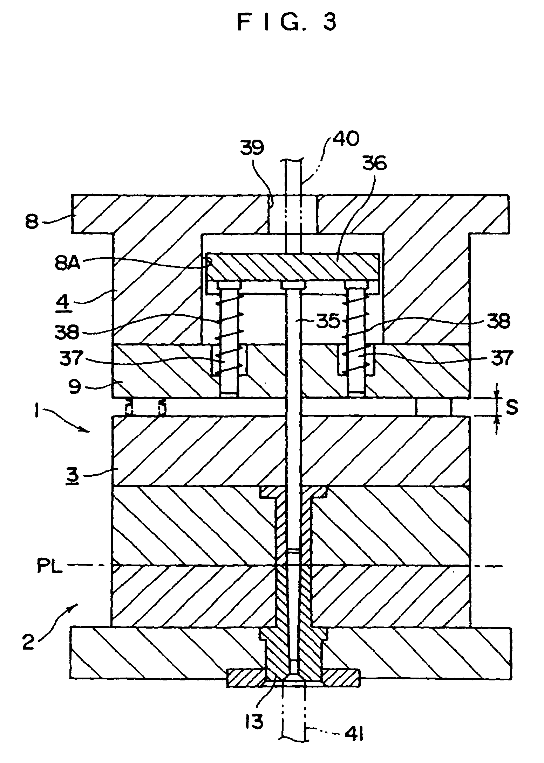

An embodiment of the present invention will be described below with reference to the drawings. An injection molding method according to the present embodiment is for molding a meniscus lens for glasses. An injection molding assembly used for the injection molding method is shown in Fig. 1 to Fig. 3. Fig. 2 and Fig. 3 are sectional views taken along the II-II line and the III-III line in Fig.1. The injection molding assembly can be formed of optional material such as glass and ceramic besides metal. Material for spectacle lenses as molded products is a thermoplastic resin such as PMMA (polymethyl methacrylate), and PC (polycarbonate).

A structure of the injection molding assembly is hereunder described with reference to Fig. 1 to Fig. 3. The injection molding assembly is composed of an upper mold 1 and a lower mold 2. The upper mold 1 is a movable mold which opens and closes vertically in relation to the lower mold 2 as s fixed mold, and a parting line PL extends horizontally. The upper mold 1 is composed of a mold body 3 on a lower side and a die fitting member 4 in an upper side. The mold body 3 is provided with insert guides 5, mold plates 6 and 7 and the like. The die fitting member 4 is provided with an upper member 8 and a lower member 9 and the like. The lower mold 2 is composed of insert guides 10, mold plates 11 and 12, a sprue bush 13 and the like.

As clearly shown in Fig. 2, the mold body 3 of the upper mold 1 is mounted on the die fitting member 4 with a bolt 14. In this mounting, the mold body 3 is mounted being guided to the lower mold 2 by means of a guide rod 15 to be freely movable within a margin S. The margin S is opened between the mold body 3 and the die fitting member 4. The mold body 3 is always resiliently biased downward by means of a plate spring 16 attached on an outer periphery of the bolt 14.

A clamping cylinder (not shown) is provided above the die fitting member 4 which is mounted on the clamping cylinder. By the clamping cylinder the die fitting member 4 and the mold body 3 vertically move and the upper mold 1 composed of the mold body 3 and the die fitting member 4 vertically moves to open and close in relation to the lower mold 2. This vertical movement is conducted while an end portion 15A of the guide rod 15 in the upper mold 1 is inserted into and pulled out from a guide pipe 17 in the lower mold 2. The upper mold 1 and the lower mold 2 are aligned in closing the mold by a positioning pin 18 in the upper mold 1 being inserted in a positioning sleeve 19 in the lower mold 2.

A margin setting cylinder (not shown) is provided below the lower mold 2. When the mold body 3 in the upper mold 1 abuts on the lower mold 2 by the clamping cylinder and the die fitting member 4 is in close contact with the mold body 3, the die fitting member 4 is raised against clamping force of the clamping cylinder with the margin setting cylinder, thus opening the margin S between the mold body 3 and the die fitting member 4.

An upper mold insert 20 is put into the insert guide 5 mounted on the mold body 3 in the upper mold 1 movably in vertical direction. A lower mold insert 21 is put into the insert guide 10 provided in the lower mold 2 so as to be movably in vertical direction. By the aforementioned arrangement, a cavity 22 for molding a spectacle lens is formed. As shown in Fig. 1, two of the cavities 22 are provided on right and left sides in the present embodiment. Therefore, the injection molding assembly is used for molding two spectacle lenses simultaneously.

The upper mold insert 20 and the lower mold insert 21 form the cavity 22 with the insert guides 5 and 10, that is, the inserts 20 and 21 are cavity forming members. In the present embodiment, the upper mold insert 20 is a cavity forming member for shaping a concave surface of the lens and the lower mold insert 21 is a cavity forming member for shaping a convex surface of the lens.

Each of the upper mold inserts 20 is attached to a piston rod 24 of a hydraulic cylinder 23 disposed downward through a T-shaped clamping member 25, the hydraulic cylinder 23 being built in the die fitting member 4 in the upper mold 1 so as to be slidable vertically. Each of the lower mold inserts 21 is attached to a piston rod 27 of a hydraulic cylinder 26 disposed upward through a T-shaped clamping member 28, the hydraulic cylinder being fixed on the lower mold 2. A back insert 29, in which the piston rod 24 is inserted to be slidable vertically, is fixed on a lower surface of the hydraulic cylinder 23.

When the upper mold 1 is raised by means of the clamping cylinder and hence the upper mold 1 and the lower mold 2 are parted from the parting line PL, the upper mold insert 20 and the lower mold insert 21 are exposed between the upper mold 1 and the lower mold 2 by advancing the piston rods 24 and 27. T-shaped slots of the inserts 20 and 21, with which the T-shaped clamping members 25 and 28 are engaged, extend to an outer region of the inserts 20 and 21 for opening so that the inserts 20 and 21 are, respectively, inserted in and released from the piston rods 24 and 27, on which the T-shaped clamping members 25 and 28 are mounted, by engagement and disengagement of the T-shaped clamping members 25 and 28 with/from the T-shaped slots. Consequently, various inserts corresponding to spectacle lenses to be molded are exchangeably attached on the upper mold 1 and the lower mold 2. Meanwhile, when the piston rods 24 and 27 retract, the upper mold insert 20 and the lower mold insert 21 abut respectively on the back insert 29 and the mold plate 12 in the lower mold 2 to be seated, which makes the inserts 20 and 21 clamped.

A pressure receiving member 30 mounted on an upper surface of the hydraulic cylinder 23 is accommodated inside a recessed portion 8A of the upper member 8 composing the die fitting member 4 in the upper mold 1. As shown in Fig. 2, a pair of guide bars 31 slidably inserted in the lower member 9 of the die fitting member 4 are hung from the pressure receiving member 30. By means of springs 32 attached on outer peripheries of the guide bars 31, the pressure receiving member 30, the hydraulic cylinder 23, and the back insert 29 are always resiliently biased upward oppositely to the lower mold 2 and the pressure receiving member 30 abuts on an upper surface of the recessed portion 8A formed downward in relation to the upper member 8 of the die fitting member 4.

A through-hole 33 leading to the recessed portion 8A is formed in the upper member 8 of the mold attaching member 4. An eject pin 34 is inserted in the through-hole 33 to move vertically by an eject cylinder (not shown). The eject pin 34 abuts on the pressure receiving member 30, and with descent of the eject pin 34 by means of the eject cylinder, the pressure receiving member 30, the hydraulic cylinder 23, the back insert 29, and the upper mold insert 20 are pressurized to move downward in relation to the upper mold 1.

As shown in Fig. 1, an eject bar 35 is inserted to be movable vertically in central parts of the mold body 3 of the upper mold 1 and the lower member 9 of the die fitting member 4. A pair of guide bars 37, vertically slidably inserted in the lower member 9, are fixedly hung from an pressure receiving member 36 mounted on an upper end of the eject bar 35 as shown in Fig. 3. By means of springs 38 attached on outer peripheries of the guide bars 37, a pressure receiving member 36 and the eject bar 35 are always resiliently biased upward. An eject pin 40, which is moved vertically with an eject cylinder (not shown), is inserted in a through-hole 39 formed in the upper member 8 of the die fitting member 4. With the eject pin 40, the pressure receiving member 36 and the eject bar 35 are pressurized to move downward.

As shown in Fig. 1, an injection nozzle 41 in an injection molding machine is connected to the sprue bush 13. A runner 43 is connected to an upper end of a sprue 42 in the sprue bush 13, the runner 43 extending to the cavities 22 provided on right and left side.

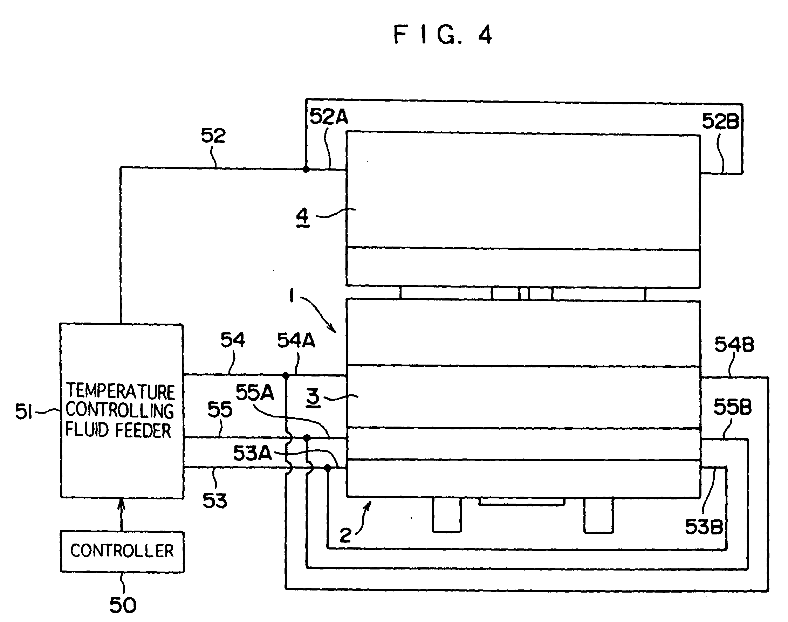

The whole apparatus for adjusting and controlling the temperature of the injection molding assembly is shown in Fig. 4. Main lines 52 to 55 extend from a temperature controlling fluid feeder 51 controlled by a controller 50. End portions of the main lines 52 to 55 lead to branch lines 52A, 52B, 53A, 53B, 54A, 54B,55A, and 55B.

The branch lines in pair for every main line 52 to 55 are disposed correspondingly to two cavities 22 provided on both sides shown in Fig. 1. In other words, the branch lines 52A and 52B are connected to ring slots 57 formed on upper surfaces of two right and left upper mold inserts 20 through passages 56, the branch lines 53A and 53B are connected to ring slots 59 formed on lower surfaces of two right and left lower mold inserts 21 through passages 58, the branch lines 54A and 54B are connected to peripheral slots 61 formed on side surfaces of two right and left upper mold insert guides 5 through passages 60, and branch lines 55A and 55B are connected to peripheral slots 63 formed on side surfaces of two right and left lower mold insert guides 10 through passages 62.

The temperature controlling fluid feeder 51 shown in Fig. 4 circulates a heating fluid and a cooling fluid through the aforementioned main lines, branch lines, passages, ring slots and peripheral slots so as to raise and lower the temperature of the injection molding assembly, more specifically, temperature around the cavities 22 inside the injection molding assembly. The heating fluid is steam and the cooling fluid is air and water, for example. In the temperature controlling fluid feeder 51 has a switching valve to switch over the heating fluid and the cooling fluid, a closing valve to supply and suspend the fluids and the like. The switching valves, the closing valves and the like are controlled by means of signal from the controller 50 which controls the heating and cooling time of the injection molding assembly by the heating fluid and the cooling fluid from the temperature controlling fluid feeder 51. Incidentally, a discharge line, for discharging the heating fluid and the cooling fluid supplied to the injection molding assembly is provided in the injection molding assembly, though not shown in the drawing.

A molding process of a plastic lens for glasses using the injection molding assembly is conducted as follows. The upper mold 1 and the lower mold 2 are closed by the clamping cylinder. When the margin S is opened between the mold body 3 of the upper mold 1 and the die fitting member 4 upon operation of the margin setting cylinder and a molten resin is ready to be filled in the cavity 22, the injection molding assembly is heated by supplying the heating fluid from the temperature controlling fluid feeder 51 to raise the temperature of the cavity 22 beyond flow halting temperature of the molten resin. Subsequently, the molten resin is injected from the injection nozzle 41 to be filled in the cavity 22 through the sprue 42 and the runner 43, and the nozzle is shut thereafter.

After the filling or during the filling, the die fitting member 4 is lowered by the clamping cylinder and the molten resin in the cavity 22 is pressurized by the amount corresponding to the margin S by the upper mold insert 20. After the pressurization, the cooling fluid is supplied to the injection molding assembly from the temperature controlling fluid feeder 51. Thus, the temperature of the molten resin in the cavity 22 is lowered to, for example, around 100 degrees centigrade below the glass transition point for molding spectacle lens by cooling and solidification of the molten resin.

After the spectacle lens is molded by cooling and solidification of the molten resin in the cavity 22, the upper mold 1 is opened from the lower mold 2 by the clamping cylinder. With the descent of the eject pins 34 and 40, a molded product is pushed out by the upper mold insert 20 and the eject bar 35. Subsequently, the molded product provided with two spectacle lenses ejected from the injection molding assembly as described above is cut to obtain the spectacle lenses molded in the cavities 22.

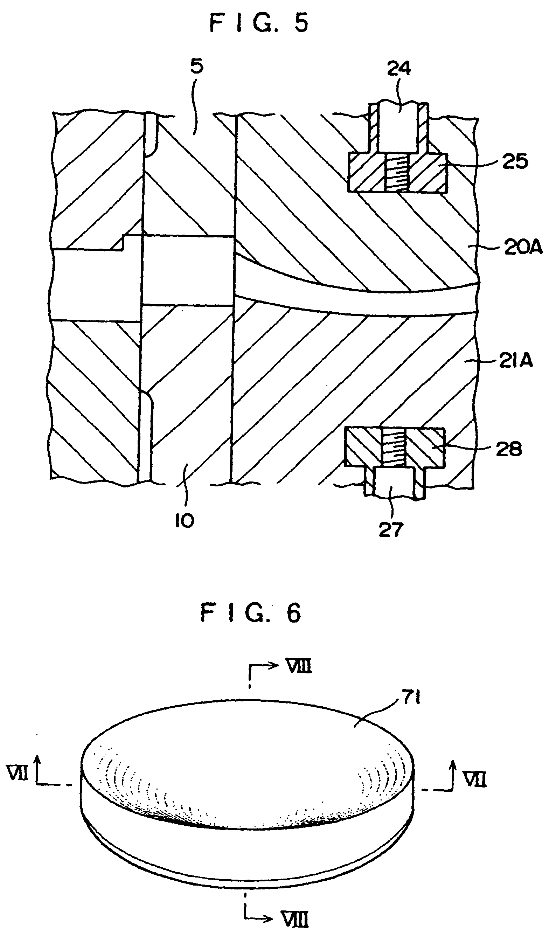

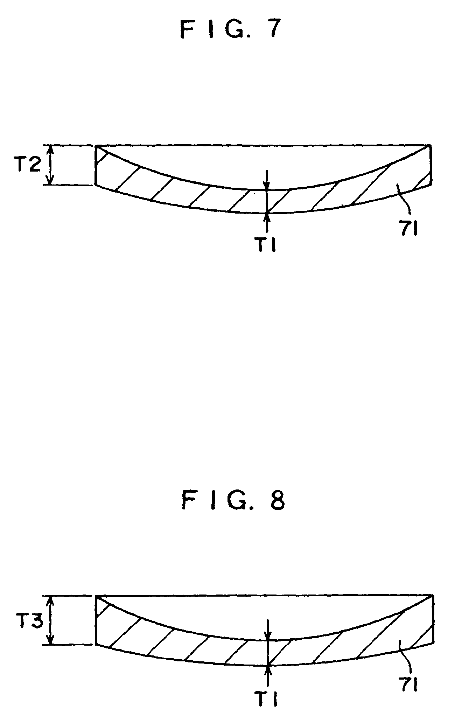

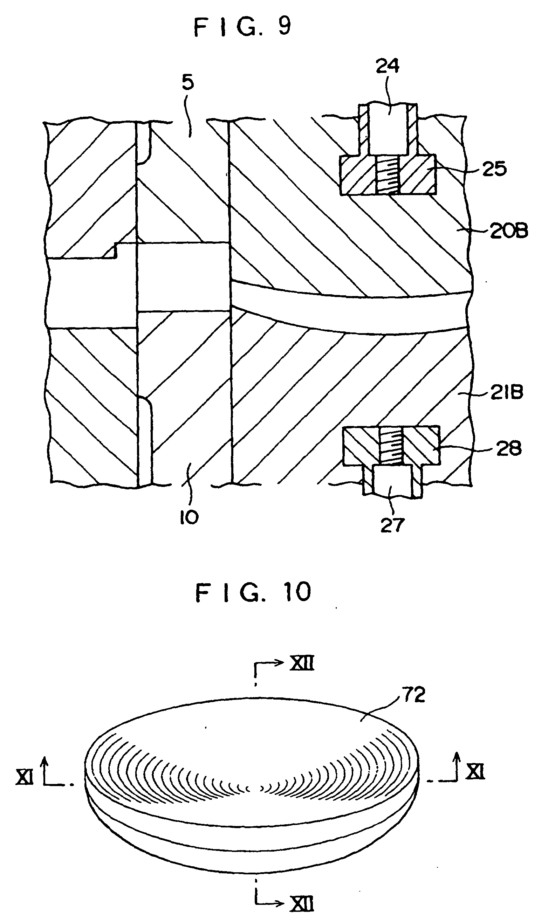

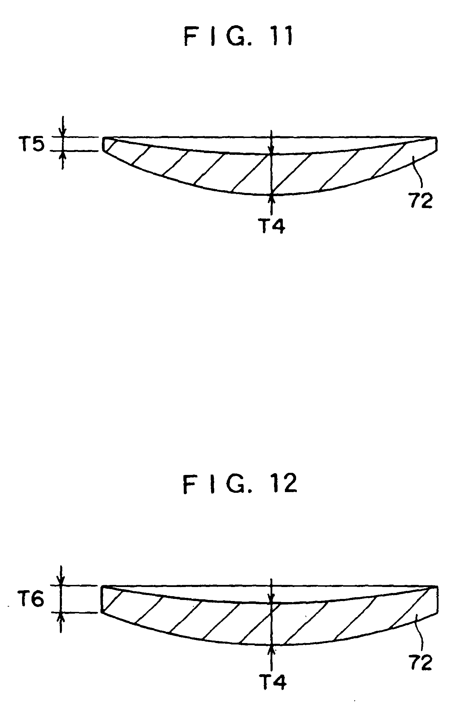

The upper mold insert 20 and the lower mold insert 21 are exchangeable as stated above. When molding process is conducted using the upper mold insert 20A and the lower mold insert 21A shown in Fig. 5, a minus lens 71 having larger a thickness T2 of a peripheral portion than a thickness T1 of a central portion is molded as shown in Figs. 6 and 7. Fig. 8 is a sectional view taken in a direction perpendicular to Fig. 7. In Fig. 8, a thickness T3 of a peripheral portion is larger than the thickness T2 thus making the minus lens 71 as astigmatic spectacle lens by the difference between T2 and T3. On the other hand, when molding process is conducted using an upper mold insert 20B and a lower mold insert 21B shown in Fig. 9, a plus lens 72 having smaller thickness T5 of peripheral portion than a thickness T4 of a central portion can be molded as shown in Figs. 10 and 11. Fig. 12 is a sectional view in a right-angled direction perpendicular to Fig. 11. In Fig. 12, a thickness T6 of peripheral portion is larger than T5, thus making the plus lens 72 as astigmatic spectacle lens by the difference between T5 and T6.

Upper mold inserts and lower mold inserts are respectively prepared correspondingly to every lens power (diopter) of minus lenses and plus lenses. Besides, another upper mold insert and a lower mold insert are provided for molding a semi-finished lens, having one surface already finished and the other surface to be later finished.

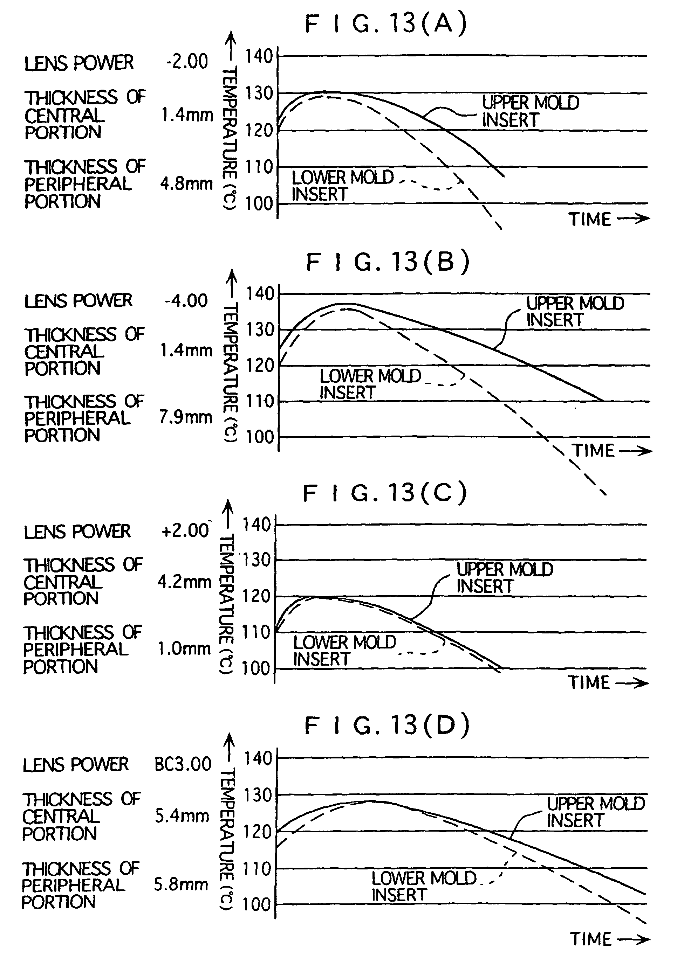

(A) to (D) in Fig. 13 show temperature curve of upper mold inserts and lower mold inserts in molding various kinds of lenses with a diameter of 76 millimeter from pressurization of the molten resin to ejection of the molded product. Fig. 13 (A) to (D) correspond to each lens shape and /or power. Fig. 13 (A) shows a case of molding a minus lens (weak minus lens) with a power of -2.00, T1 of 1.4mm and T2 of 4.8mm, Fig. 13 (B) shows a case of molding a minus lens (strong minus lens) with a power of -4.00, T1 of 1.4mm and T2 of 7.9mm, Fig. 13 (C) shows a case of molding a plus lens with a power of +2.00, T4 of 4.2mm and T5 of 1.0mm, and Fig. 13 (D) shows a case of molding a semi-finished lens with a base curve of convex surface of 3.00D, a thickness of a central portion of 5.4mm and a thickness of a peripheral portion of 5.8mm. These figures are for explaining basic lens molding patterns (basic lens molding patterns of a weak minus lens, a strong minus lens, a semi-finished lens and a plus lens) corresponding to each lens shape and/or power.

When a minus lens is molded as shown in Fig. 13 (A) and (B), the temperature of a lower mold insert (namely, a cavity forming member for shaping a convex surface of the lens) in ejecting a molded product from the injection molding assembly is lowered below the temperature of an upper mold insert (namely, a cavity forming member for shaping a concave surface of the lens). When there is such a difference in temperature as above between the lower mold insert and the upper mold insert according to the difference in lens shape and /or power, since the temperature of the convex surface of the ejected lens is low even in a minus lens of which thin central portion is likely to be bent and the temperature is high when being ejected, the convex side of the lens solidifies earlier than the concave side thereof, thereby efficiently preventing the central portion from being bent. In other words, a concave shape of the lower mold insert and a convex shape of the upper mold insert are precisely transferred to a molten resin so that a high-precision lens can be manufactured.

It is also effective in molding a lens of which a thickness of a central portion is smaller than that of a peripheral portion that the temperature of the lower mold insert is lowered below the temperature of the upper mold insert when the molded product is ejected as described above. Therefore, when a semi-finished lens with a small difference in thickness between a central portion thereof and a peripheral portion thereof shown in (D) in Fig. 13 is molded, the temperature of the lower mold insert is also preferably lowered below that of the upper mold insert as described in molding the minus lens.

As shown in Fig. 13 (A), (B), and (D), the larger the difference in thickness between a central portion and a peripheral portion becomes, the more the difference in temperature between the lower mold insert and the upper mold insert is enlarged, which securely prevents various kinds of lenses with various differences in thickness between central portions and peripheral portions from bending at central portions thereof.

As shown in Fig. 13 (A), (B), and (D), particularly in Fig. 13 (A) and (B), when a lens of which a thickness of a peripheral portion is larger than the thickness of a central portion is molded, the temperature of the lower mold insert is lowered below that of the upper mold insert from pressurization of the molten resin to ejection of a molded product. As a result, the temperature of a convex surface of the lens can be securely lowered below the temperature of a concave surface when the molded product is ejected, thereby improving transfer precision of shapes of the lower mold insert and the upper mold insert.

Following Table 1 shows the cooling time of the injection molding assembly from the start of supplying the aforementioned cooling liquid after pressurizing the molten resin to ejection of a molded product when a minus lens and a plus lens are molded. The cooling time is divided into groups according to lens power (diopter) (spherical power) and astigmatic power. Especially in the minus lens, the grouping is based on the value of the sum of the spherical power and the astigmatic power. The lens spehrical power is indicated in a vertical axis and the astigmatic power is indicated in a horizontal axis. A three-digit number in the Table 1 indicates the cooling time (second).

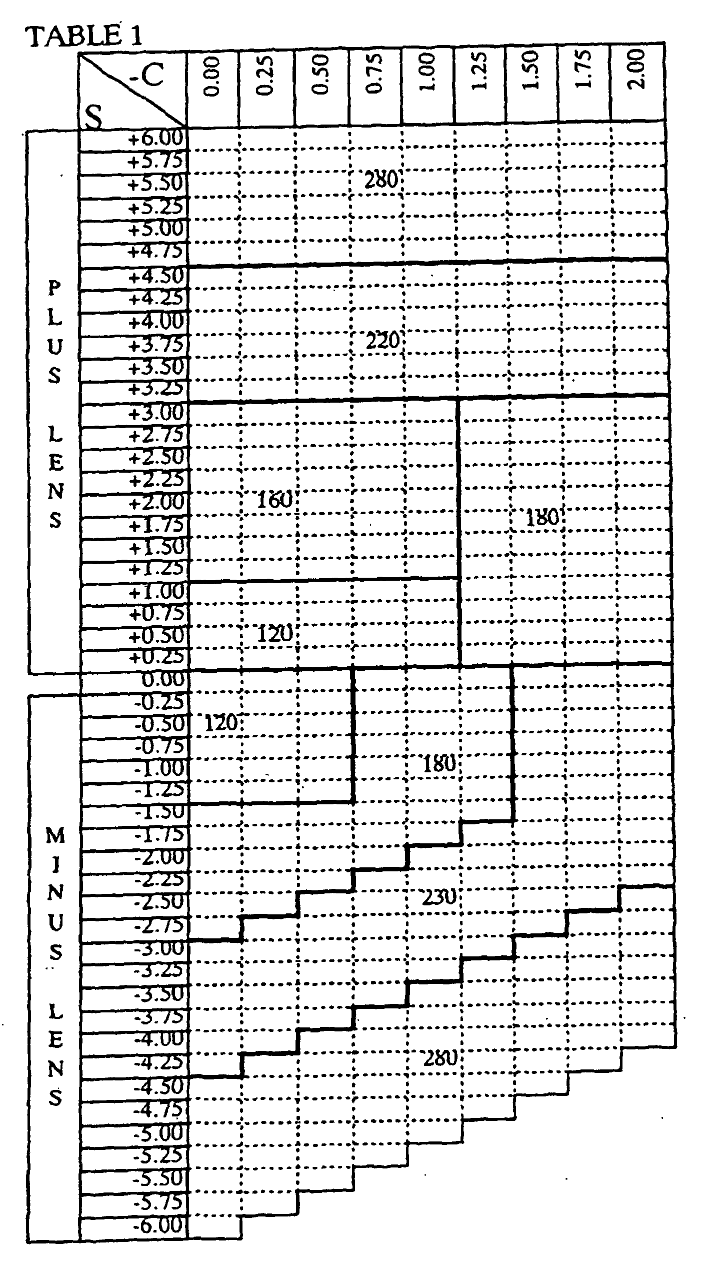

As can be seen from Fig. 13 (A) and (B), the increase of lens power in a minus lens means that a thickness of the peripheral portion T2 becomes much larger than the thickness of the central portion T1. Also, the increase of lens power in a plus lens means that a thickness of the central portion T4 becomes much larger than that of the peripheral portion T5. As shown in Table 1, the more a lens power increases, the longer a cooling time is made in both the minus lens and the plus lens. When a lens power increases, though surface area of the cavity in the injection molding assembly does not substantially changes, the volume of a lens, that is, the amount of the molten resin filled in the cavity 22 increases. Accordingly, the cooling time is lengthened in proportion to the increase of the lens power, thereby gradually cooling the whole molten resin in the cavity 22 uniformly to a predetermined temperature (the temperature for ejecting the molded product). Consequently, a high-precision and high-quality plastic spectacle lens with little heat distortion, little shrinkage deformation and the like can be obtained.

The cooling time of the injection molding assembly is lengthened in proportion to the increase of the lens power also in molding a semi-finished lens.

As can be seen from a comparison of graphs of Fig. 13 (A) and (B), a minus lens with the time from pressurization of molten resin to ejection of the molded product is made longer for minus lens having greater lens power in a minus lens with a smaller power even when the minus lenses have substantially the same surface area in the cavity, thereby lengthening a cooling time of the injection molding assembly. When a lens having larger thickness in the peripheral portion than the thickness of the central portion is molded, the temperature of the lower mold insert is lowered below the temperature of the upper mold insert and a cooling time of the injection molding assembly is lengthened as shown in Fig. 13 (A) and (B), which prevents the lens from bending at the central portion so as to enable high insert transfer precision and also prevents heat distortion, thus making a high-quality lens.

As described above, the thickness of peripheral portions T2 and T3 of a minus lens and the thickness of peripheral portions T5 and T6 of a plus lens respectively, show the thickness of two points which are 90 degrees apart in a circumferential direction. The increase of difference between T2 and T3, and between T5 and T6 leads to the increase of astigmatic power. Even in spectacle lenses with the same lens power, the volume of lens becomes larger and more molten resin is filled in the cavity 22 when an astigmatic power is made larger.

In the injection molding assembly according to the embodiment described above, the cavity forming member for shaping the lens convex surface is disposed on the lower mold and the cavity forming member for shaping the lens concave surface is disposed on the upper mold, but the reverse disposition is also available. The present invention can be also implemented by means of an injection molding assembly having horizontally-opposed cavity forming members.

According to the aforementioned embodiment, the heating fluid and the cooling fluid are used respectively for heating and cooling the injection molding assembly. However, the present invention is not limited to the above arrangement and preadjusted temperature controlling fluid may be used.

According to the present invention, the cooling time of the injection molding assembly after pressurization of the molten resin is lengthened for a lens with a large power requiring a larger amount of molten resin to be filled in the cavity, so that the entire molten resin can be uniformly cooled to the predetermined temperature. Consequently, a high-precision spectacle lens with little heat distortion and little shrinkage deformation and the like can be manufactured.

A method of injection molding a plastic lens according to the present invention is applicable for molding a plastic lens for glasses, an optical plastic lens etc. made of a thermoplastic resin, and for molding a meniscus-shaped plastic lens for glasses which require high-precision molding.

## Claims

1. A method of injection molding plastic lenses having different lens spherical power, the method comprising the steps of:
filling a molten resin in a cavity (22) for molding the lens inside a heated injection molding assembly (1,2);
pressurizing the molten resin;
cooling the injection molding assembly to cool and solidify the molten resin to mold the lens in the cavity; and
ejecting the lens from the cavity, **characterised in that**
the cooling time of the injection molding assembly is lengthened in proportion to increase in the power of the lens molded in the cavity, the lens is a spectacle lens, the injection molding assembly is being cooled according to at least two predetermined temperature curves for molding a weak lens and a strong lens for minus lenses and according to at least one temperature curve for a plus lens, the temperature of the injection molding assembly being controlled in accordance with the predetermined temperature curves.

2. The method of injection molding plastic lenses according to claim 1, wherein another differentpredetermined temperature curve is provided for a semi-finished lens, one side of which is later molded, the semi-finished lens being molded by controlling temperature of the injection molding assembly (1,2) in accordance with the different predetermined temperature curve.

3. The method of injection molding plastic lenses according to claim 1, wherein the time to cool the injection assembly (1,2) after pressurizing the molten resin is set according to lens spherical power and lens astigmatic power when a minus lens and a plus lens are molded.

4. The method of injection molding plastic lenses according to claim 3, wherein the time to cool the injection molding assembly (1,2) after pressurizing the molten resin is set according to the sum of lens spherical power and lens astigmatic power by molding a minus lens.

5. The method of injection molding plastic lenses according to any preceding claim, wherein the injection molding assembly is heated and cooled by means of a temperature controlling fluid.

6. The method of injection molding plastic lenses according to claim 5, wherein a heating fluid and a cooling fluid are used as the temperature controlling fluid.

## Patentansprüche

1. Verfahren zum Spritzgießen von Kunststofflinsen mit unterschiedlicher sphärischer Linsenleistung, das folgende Schritte aufweist:
das Einfüllen eines geschmolzenen Harzes in eine Kavität (22) zum Gießen der Linse innerhalb einer erwärmten Spritzgießanordnung (1, 2);
das Ausüben eines Drucks auf das geschmolzene Harz;
das Kühlen der Spritzgießanordnung, um das Harz zu kühlen und auszuhärten und die Linse in der Kavität zu formen; und
das Ausstoßen der Linse aus der Kavität, **dadurch gekennzeichnet, daß**
die Kühldauer der Spritzgießanordnung proportional zum Anstieg der Leistung der Linse verlängert wird, die in der Kavität geformt wird, die Linse eine Brillenlinse ist, die Spritzgießanordnung gemäß wenigstens zwei vorbestimmten Temperaturkurven zum Spritzen einer schwachen Linse und einer starken Linse bei Minuslinsen und gemäß wenigstens einer Temperaturkurve bei einer Pluslinse gekühlt wird, wobei die Temperatur der Spritzgießanordnung entsprechend den vorbestimmten Temperaturkurven geregelt wird.

2. Verfahren zum Spritzgießen von Kunststofflinsen nach Anspruch 1, bei dem eine weitere unterschiedliche vorbestimmte Temperaturkurve für eine halbfertige Linse vorgesehen ist, deren eine Seite später geformt wird, wobei die halbfertige Linse durch Regelung der Temperatur der Spritzgießanordnung (1, 2) gemäß der weiteren unterschiedlichen vorbestimmten Temperaturkurve geregelt wird.

3. Verfahren zum Spritzgießen von Kunststofflinsen nach Anspruch 1, bei dem die Kühldauer der Spritzgießanordnung (1, 2), nach dem Unterdrucksetzen des geschmolzenen Harzes, entsprechend der sphärischen Linsenleistung und der astigmatischen Linsenleistung eingestellt wird, wenn eine Minuslinse und eine Pluslinse gespritzt werden.

4. Verfahren zum Spritzgießen von Kunststofflinsen nach Anspruch 3, bei dem die Kühldauer der Spritzgießanordnung (1, 2) nach dem Ausüben eines Drucks auf das geschmolzene Harz entsprechend der Summe aus der sphärischen Linsenleistung und der astigmatischen Linsenleistung durch Spritzen einer Minuslinse eingestellt wird.

5. Verfahren zum Spritzgießen von Kunststofflinsen nach einem der vorstehenden Ansprüche, bei dem die Spritzgießanordnung mittels eines Temperaturregelfluids erwärmt und abgekühlt wird.

6. Verfahren zum Spritzgießen von Kunststofflinsen nach Anspruch 5, bei dem ein Erwärmungsfluid und ein Abkühlungsfluid als das Temperaturregelfluid benutzt werden.

## Revendications

1. Procédé de moulage par injection de verres en plastique ayant différentes puissances sphériques de verre, le procédé comprenant les étapes consistant à :
remplir une cavité (22) de résine fondue pour mouler le verre à l'intérieur d'un ensemble de moulage par injection chauffé (1, 2) ;
mettre la résine fondue sous pression ;
refroidir l'ensemble de moulage par injection pour refroidir et solidifier la résine fondue pour mouler le verre dans la cavité ; et
éjecter le verre de la cavité, **caractérisé en ce que** :
le temps de refroidissement de l'ensemble de moulage par injection est allongé en proportion à l'augmentation de la puissance du verre moulé dans la cavité, le verre est un verre de lunettes, l'ensemble de moulage par injection est refroidi selon au moins deux courbes de température prédéterminées pour mouler un verre de faible puissance et un verre de forte puissance pour des verres négatifs, et selon au moins une courbe de température pour un verre positif, la température de l'ensemble de moulage par injection étant régulée selon les courbes de température prédéterminées.

2. Procédé de moulage par injection de verres en plastique selon la revendication 1, dans lequel une autre courbe de température prédéterminée différente est proposée pour un verre semi-fini, dont un côté est ensuite moulé, le verre semi-fini étant moulé en régulant la température de l'ensemble de moulage par injection (1, 2) selon la courbe de température prédéterminée différente.

3. Procédé de moulage par injection de verres en plastique selon la revendication 1, dans lequel le temps de refroidissement de l'ensemble de moulage par injection (1, 2) après mise sous pression de la résine fondue est défini en fonction de la puissance sphérique du verre et de la puissance astigmatique du verre lors du moulage d'un verre négatif et d'un verre positif.

4. Procédé de moulage par injection de verres en plastique selon la revendication 3, dans lequel le temps de refroidissement de l'ensemble de moulage par injection (1, 2) après mise sous pression de la résine fondue est défini en fonction de la somme de la puissance sphérique du verre et de la puissance astigmatique du verre en moulant un verre négatif.

5. Procédé de moulage par injection de verres en plastique selon l'une quelconque des revendications précédentes, dans lequel l'ensemble de moulage par injection est chauffé et refroidi au moyen d'un fluide de régulation de température.

6. Procédé de moulage par injection de verres en plastique selon la revendication 5, dans lequel un fluide de chauffage et un fluide de refroidissement sont utilisés comme fluide de régulation de température.
